# EUROPÄISCHE PATENTSCHRIFT

(11) **EP 1 801 439 B1**
(45) Veröffentlichungstag und Bekanntmachung des Hinweises auf die Patenterteilung: **24.03.2010**
(21) Anmeldenummer: 06018294.6
(22) Anmeldetag: 01.09.2006
(51) Int. Cl.: F16D 3/68

(54) **Elastische Kupplung und Verfahren zur Demontage von Bolzen aus Kupplungsteilen der Kupplung**
Flexible coupling and method of disassembly of bolts from the coupling parts
Accouplement flexible et méthode de désassemblage des boulons des pièces d'accouplement.

(30) Priorität: 20.12.2005 DE 102005061240
(43) Veröffentlichungstag der Anmeldung: 27.06.2007
(73) Patentinhaber: Siemens Aktiengesellschaft, 80333 München (DE)
(72) Erfinder: Diesfeld, Jörg, 46397 Bocholt (DE); Gödde, Peter, Dr., 46286 Dorsten (DE); te Uhle, Michael, 46414 Rhede (DE)

(56) Entgegenhaltungen:
- DD-A- 97 282
- DE-A1- 4 312 518
- DE-A1- 10 201 587
- DE-A1- 19 612 577
- GB-A- 2 034 639
- US-A- 3 865 497

## Beschreibung

Die Erfindung betrifft eine elastische Kupplung zur Verbindung zweier Wellen mit den Merkmalen des Oberbegriffes des Anspruches 1 sowie ein Verfahren zur Demontage von Bolzen aus Kupplungsteilen der Kupplung.

Derartige elastische Kupplungen sind meistens als durchschlagsichere Bolzenkupplungen ausgelegt und verbinden zwei Maschinen und übertragen Leistung in Form von Drehmoment und Drehbewegung. Wenn vorhandene elastische Puffer einer solchen Kupplung zu wechseln sind oder die Drehmomentübertragung zwecks Drehrichtungskontrolle des Antriebsmotors unterbrochen werden soll, sind die Bolzen aus den Kupplungsteilen zu entfernen. Da die Verbindung von Kupplungsteil und Bolzen selbsthemmend ausgeführt ist, muss eine Kraft aufgebracht werden, um die Selbsthemmung zu überwinden und den Bolzen auszupressen. Alternativ zu einer quasi statischen Lastaufbringung kann eine geringere Kraft schlagartig aufgebracht werden. Sehr häufig stehen jedoch keine geeigneten Werkzeuge zur Aufbringung einer Kraft zu Verfügung. Oder der Bauraum ist eingeschränkt, so dass ein geeignetes Werkzeug nicht zum Einsatz kommen kann.

Aus der DE 43 12 518 A1 ist eine elastische Wellenkupplung bekannt, die eine flexible Membranscheibe und eine starre Kupplungsscheibe umfasst, an der einseitig Mitnehmerbolzen eingespannt sind. Die Membranscheibe trägt an ihrem Rand kugelbewegliche Gummibuchsen, die axial verschiebbar auf den Mitnehmerbolzen angeordnet sind.

Aus der US-A-3 865 497 ist eine Presssitzverbindung zwischen einem konischen Wellenabschnitt und einer Buchse mit einer konischen Bohrung bekannt. Durch die Buchse ist eine radiale Bohrung bis zu den Sitzflächen zwischen Wellenabschnitt und Buchse geführt. Durch die radiale Bohrung wird ein Druckmittel aus einer externen Druckmittelquelle eingeleitet, um die Buchse auf den Wellenabschnitt zu schieben oder den Presssitz zu lösen.

Der Erfindung liegt die Aufgabe zugrunde, die gattungsgemäße elastische Kupplung derart zu gestalten, dass die Demontage der Bolzen aus den Kupplungsteilen ohne besonderes Werkzeug und auch bei eingeschränktem Bauraum möglich ist.

Die Aufgabe wird bei einer gattungsgemäßen Kupplung erfindungsgemäß durch die kennzeichnenden Merkmale des Anspruchs 1 gelöst. Vorteilhafte Ausgestaltungen der Erfindung sind in den Unteransprüchen angegeben. Ein Verfahren zur Demontage der Bolzen aus den Kupplungsteilen der Kupplung ist Gegenstand des Anspruchs 12.

Wird bei der erfindungsgemäßen elastischen Kupplung die Schraube in die mit Fett gefüllte Bohrung eingedreht, so wird die Füllung der Bohrung verdichtet. Dadurch wird ein Druck zwischen dem Bolzen und der Aufnahmebohrung des Bolzens erzeugt. Da die Aufnahmebohrung im Bereich des selbsthemmenden Sitzes des Bolzens konisch oder als Stufenbohrung ausgeführt ist, entsteht eine axiale Auspresskraft, die den Bolzen aus seinem Sitz herauspresst. Durch das Fett wird zudem der Reibwert zwischen Bolzen und Aufnahmebohrung verringert, so dass die Auspresskraft vergleichsweise gering ist.

Mehrere Ausführungsbeispiele der Erfindung sind in der Zeichnung dargestellt und werden im Folgenden näher erläutert. Es zeigen
- Fig. 1: einen Längsschnitt durch eine Kupplung;
- Fig. 2 und 3: verschiedene Ausführungsformen der Erfindung gemäß Einzelheit Z nach Fig. 1;
- Fig. 4 und 5: andere Ausführungsformen der Erfindung gemäß einer anderen Einzelheit nach Fig. 1 und
- Fig. 6 und 7: weitere Ausführungsformen der Erfindung gemäß Fig. 5.

Die dargestellte elastische Bolzenkupplung ist mit zwei Kupplungsteilen 1, 2, einem ersten Kupplungsteil 1 und einem zweiten Kupplungsteil 2, ausgeführt. Die Kupplungsteile 1, 2 sind auf die Enden zweier einander gegenüber liegender Maschinenwellen 3, 4. Die Kupplungsteile 1, 2 sind mit mehreren miteinander fluchtenden Aufnahmebohrungen 5, 6 versehen. Die Aufnahmebohrungen 5, 6 nehmen Bolzen 9 auf, über welche die beiden Kupplungsteile 1, 2 miteinander verbunden sind.

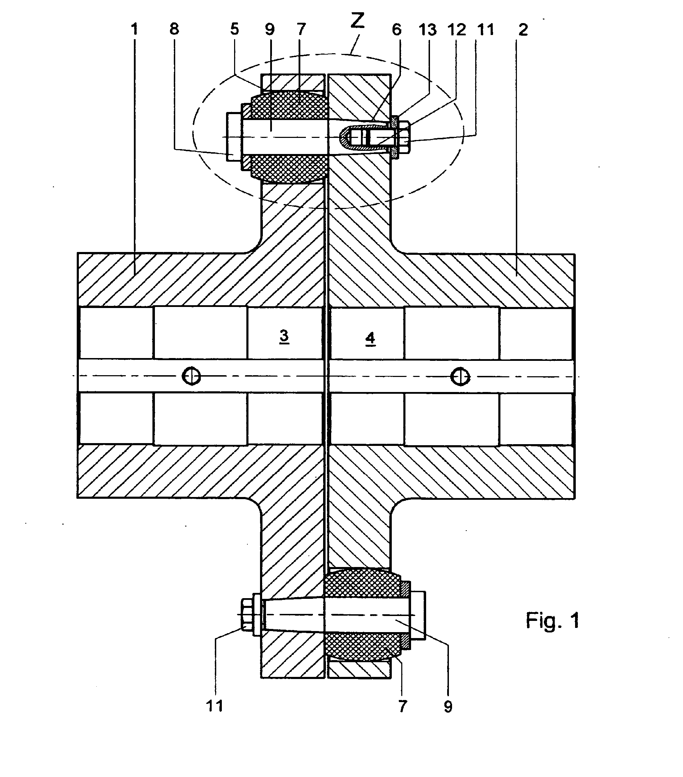

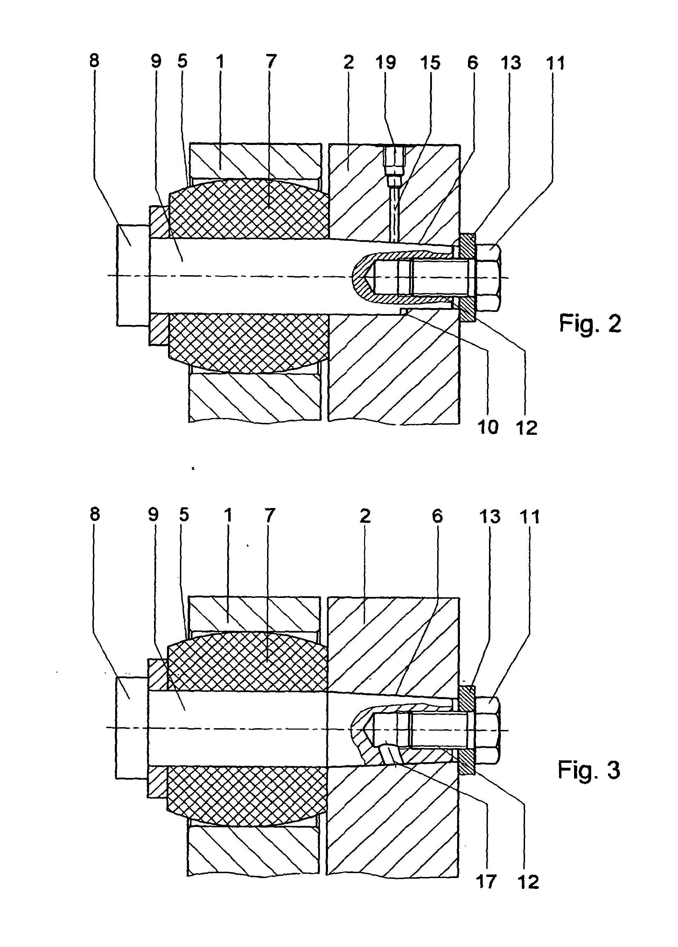

Wie im oberen Teil der Fig. 1 zu erkennen, ist innerhalb des ersten Kupplungsteiles 1 der Bolzen 9 von einem elastischen, ballig geformten Puffer 7 umschlossen, der innerhalb der Aufnahmebohrung 5 zwischen einem Kopf 8 des Bolzens 9 und der Stirnfläche des zweiten Kupplungsteiles 2 gehalten ist. Die zugehörige Aufnahmebohrung 6 in dem zweiten Kupplungsteil 2 ist konisch ausgeführt mit einem vergleichsweise kleinen Kegelwinkel, so dass die Verbindung zwischen dem Kupplungsteil 2 und dem Bolzen 9 selbsthemmend wirkt. Alternativ kann die Aufnahmebohrung 6 zylindrisch als Stufenbohrung 10 ausgeführt sein, wie im unteren Teil der in Fig. 2 gezeigten Kupplung zu erkennen ist.

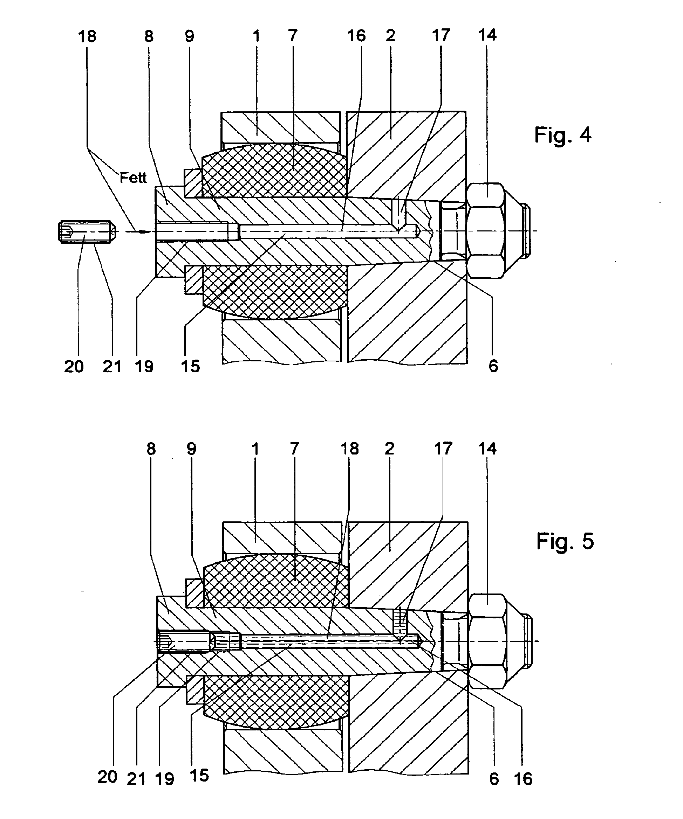

Der Bolzen 9 ist an dem zweiten Kupplungsteil 2 befestigt und wird durch eine Befestigungsschraube 11, die in eine axiale Gewindebohrung 12 in dem Bolzen 9 geschraubt ist, und durch eine die Gewindebohrung 12 übergreifende Scheibe 13 gehalten (Fig. 1, 2, 3). Der Bolzen 9 kann auch durch eine Mutter 14, die auf das aus dem zweiten Kupplungsteil 2 herausragende Ende des Bolzens 9 geschraubt ist, an dem zweiten Kupplungsteil 2 befestigt sein (Fig. 4, 5). Die elastischen Puffer 7 können ausschließlich in einem der Kupplungsteile 1, 2 oder wechselweise in dem ersten Kupplungsteil 1 und dem zweiten Kupplungsteil 2 vorgesehen werden.

Um das Lösen des Bolzens 9 aus seinem selbsthemmenden Sitz bei einer Demontage der Bolzen aus den Kupplungsteilen 1, 2 zu erleichtern, ist mindestens eine Bohrung 15 von dem selbsthemmenden Sitz des Bolzens 9 zur Außenseite der Kupplung geführt (Fig. 3, 4, 5). Die Bohrung 15 weist einen axialen Bohrungsabschnitt 16 auf, der gemäß Fig. 4 und 5 zentral durch den Bolzen 9 von der der Mutter 14 abgewandten Seite bis etwa zur Mitte des selbsthemmenden Sitzes des Bolzens 9 innerhalb der Aufnahmebohrung 6 des zweiten Kupplungsteiles 2 geführt ist. Von dem innen liegenden Ende des axialen Bohrungsabschnittes 16 ist ein radialer oder schräg verlaufender radialer Bohrungsabschnitt 17 bis zur Kontaktfläche zwischen dem Bolzen 9 und der Aufnahmebohrung 6 geführt.

Vorteilhafterweise ist der Bolzen 9 im Bereich des radialen Bohrungsabschnittes 17 mit einer umlaufenden Nut versehen, die das niedrig viskose Medium über den Bolzenumfang verteilt. In einer Ausführungsvariante kann die umlaufende Nut in der Aufnahmebohrung 6 im Bereich des radialen Bohrungsabschnittes 17 im Kupplungsteil 1, 2 eingebracht werden.

Anstatt die Bohrung 15 mit dem axialen Bohrungsabschnitt 16 und dem radialen Bohrungsabschnitt 17 in den Bolzen 9 einzubringen, kann die Bohrung 15 auch in dem Kupplungsteil vorgesehen werden, der die den selbsthemmenden Sitz des Bolzens 9 bewirkende Aufnahmebohrung 6 aufweist (Fig. 2).

Die Bohrung 15 mit dem axialen Bohrungsabschnitt 16 und dem radialen Bohrungsabschnitt 17 ist mit einem niedrig viskosen Medium, vorzugsweise mit Schmierfett 18, gefüllt. Das äußere Ende des axialen Bohrungsabschnittes 16 ist mit einem Gewinde 19 versehen, in das eine Schraube 20, z. B. ein Gewindestift, einschraubbar ist. Zwischen dem Gewinde 19 der Bohrung 15 und dem Gewinde der Schraube 20 ist eine Abdichtung vorgesehen, die ein Dichtband 21, z. B. aus Teflon, oder ein O-Ring oder eine Spaltdichtung sein kann. Die abgedichtete Schraube 20 verschließt die Bohrung 15 dicht und verhindert ein Austreten von Fett.

Die Abdichtung mit dem Dichtband 21 kann zudem die Aufgabe einer Schraubenverliersicherung für die Schraube 20 erfüllen. Es können auch andere bekannte Verliersicherungen für die Schraube 20 in Einsatz gebracht werden.

Vor der Erstmontage des Bolzens 9 wird die Bohrung 15 mit Fett 18 gefüllt und das Gewinde 19 des axialen Bohrungsabschnittes 16 mit der Schraube 20 (Gewindestift) verschlossen. Das Gewinde 19 der Schraube 20 ist gegenüber dem Gewinde des Bolzens 9 abgedichtet. Überschüssiges Fett wird entfernt, und der Bolzen 9 wird montiert. (Fig. 5)

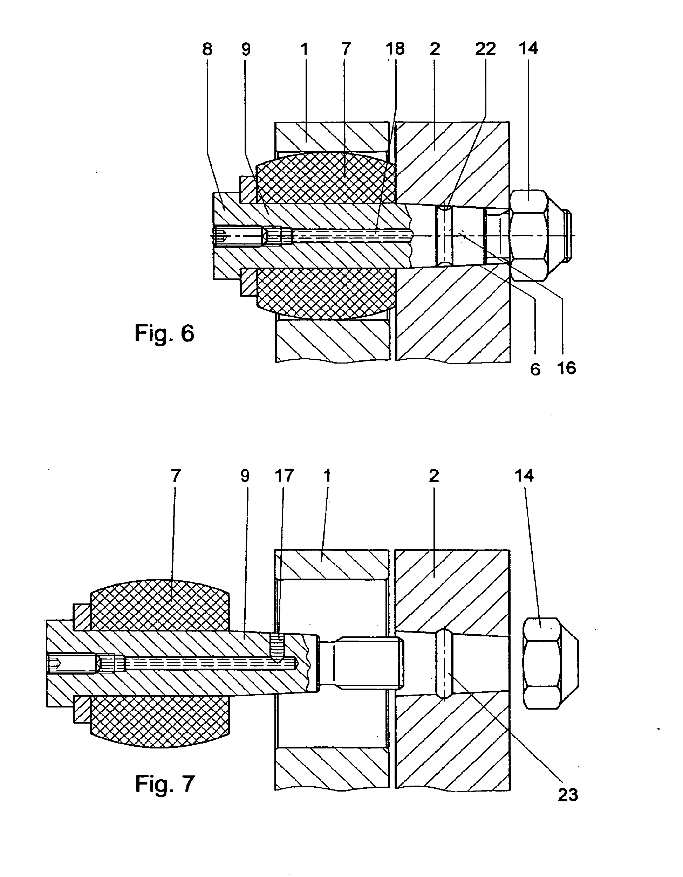

Eine weitere Ausführungsvariante gemäß der Fig. 5 ist in der Fig. 6 dargestellt. Dabei ist der Bolzen 9 im Bereich des radialen Bohrungsabschnittes 17 mit einer umlaufenden Nut 22 versehen.

Eine noch weitere Ausführungsvariante gemäß Fig. 5 ist in der Fig. 7 dargestellt. Bei der Ausführung gemäß Fig. 7 ist eine umlaufende Nut 23 in der Aufnahmebohrung 6 im Bereich des radialen Bohrungsabschnittes 17 im Kupplungsteil 2 angebracht.

Soll der Bolzen 9 demontiert werden, so ist zunächst die Befestigungsschraube 11 oder die Mutter 14 zu lösen und die Schraube 20 mit der Abdichtung 21 weit in die Bohrung 15 des Bolzens 9 einzuschrauben. Die Fettfüllung innerhalb der Bohrung 15 wird dadurch verdichtet und erzeugt einen Druck p zwischen dem Bolzen 9 und dem Kupplungsteil 2. Die Abdichtung mit dem Dichtband 21 verhindert das Entweichen der Fettfüllung durch das Gewinde der Schraube 20. Dadurch, dass die Aufnahmebohrung 6 konisch oder als Stufenbohrung 10 ausgeführt ist, wird eine axiale Auspresskraft erzeugt, die den Bolzen 9 aus seinem Sitz herauspresst. Da das Lösen des Bolzens 9 schlagartig passiert, muss die Befestigungsschraube 11 oder die Mutter 14 nur um einige mm gelöst sein, um den Bolzen 9 nach Lösen des Sitzes zu halten.

Vor der erneuten Montage des Bolzens 9 soll die Schraube 20 wieder in ihre Ausgangslage zurückgeschraubt werden. Falls etwas Fett entwichen ist, soll eine entsprechende Menge, z. B. über den radialen Bohrungsabschnitt 17, zugeführt werden.

Weiterhin ist es vorteilhaft, die die Befestigungsschraube 11 aufnehmende Gewindebohrung 12 heranzuziehen und den Grund der Gewindebohrung 12 mit der Kontaktfläche zwischen dem Bolzen 9 und der Aufnahmebohrung 6 durch den radialen oder schräg radialen Bohrungsabschnitt 17 zu verbinden (Fig. 3). Die Demontage des Bolzens 9 wird dann wie folgt durchgeführt. Zunächst ist die Befestigungsschraube 11 zu demontieren und die Gewindebohrung 12 mit Fett zu füllen. Die Fettfüllmenge ist so vorbestimmt, dass die Befestigungsschraube 11, die zuvor mit Dichtband 21 versehen wird, hinreichend weit in das Gewinde 19 einzuschrauben ist. Durch die Montage der Befestigungsschraube 11 wird der erforderliche Auspressdruck p zur Demontage des Bolzens 9 erreicht. Wenn die Befestigungsschraube 11 zur Anlage kommt, bevor der Sitz des Bolzens 9 gelöst wird, ist die Fettmenge gegebenenfalls zu vergrößern.

## Patentansprüche

1. Elastische Kupplung zur Verbindung zweier Wellen (3, 4) bestehend aus zwei Kupplungsteilen (1, 2), die über Bolzen (9) miteinander verbunden sind, die durch axial in den Kupplungsteilen (1, 2) angebrachte Aufnahmebohrungen (5, 6) hindurchgeführt sind, wobei jeder Bolzen (9) in der jeweiligen Aufnahmebohrung (5, 6) eines Kupplungsteiles (1, 2) von einem ballig geformten und in der Aufnahmebohrung eingesetzten elastischen Puffer (7) umschlossen ist und in die Aufnahmebohrung (6, 5) des anderen Kupplungsteils (2, 1) selbsthemmend eingesetzt ist, **dadurch gekennzeichnet, dass** von der Kontaktfläche zwischen dem Bolzen (9) und der Aufnahmebohrung (6, 5) im Bereich des selbsthemmenden Sitzes des Bolzens (9) mindestens eine Bohrung (15) bis zur Außenseite der Kupplung geführt ist und dass die Bohrung (15) mit einem niedrig viskosen Medium gefüllt und im Eingangsbereich lösbar durch eine in die Bohrung (15) einschraubbare Schraube (20) verschlossen ist.

2. Kupplung nach Anspruch 1, **dadurch gekennzeichnet, dass** die Bohrung (15) einen radial oder schräg zu der Kontaktfläche führenden Bohrungsabschnitt (17) und einen axial zur Außenseite der Kupplung führenden Bohrungsabschnitt (16) aufweist.

3. Kupplung nach Anspruch 1 oder 2, **dadurch gekennzeichnet, dass** die Bohrung (15) mit Fett gefüllt ist.

4. Kupplung nach einem der Ansprüche 1 bis 3, **dadurch gekennzeichnet, dass** der axiale Bohrungsabschnitt (16) im Eingangsbereich mit einem Gewinde (19) versehen ist, in das die die Bohrung (15) verschließende Schraube (20) eingreift.

5. Kupplung nach einem der Ansprüche 1 bis 4, **dadurch gekennzeichnet, dass** zwischen dem Gewinde (19) des axialen Bohrungsabschnittes (16) und dem Gewinde (19) der Schraube (20) eine Abdichtung vorgesehen ist.

6. Kupplung nach Anspruch 5, **dadurch gekennzeichnet, dass** die Abdichtung aus einem Teflondichtband (21) besteht.

7. Kupplung nach einem der Ansprüche 1 bis 6, **dadurch gekennzeichnet, dass** der axiale Bohrungsabschnitt (16) und der radiale Bohrungsabschnitt (17) der Bohrung (15) in den Bolzen (9) eingebracht sind.

8. Kupplung nach einem der Ansprüche 1 bis 6, **dadurch gekennzeichnet, dass** die Bohrung (15) in eines der Kupplungsteile (1, 2) in der Nähe des selbsthemmenden Sitzes des Bolzens (9) eingebracht ist.

9. Kupplung nach einem der Ansprüche 1 bis 6, **dadurch gekennzeichnet, dass** der Bolzen (9) in der Kupplung durch eine Befestigungsschraube (11) gehalten ist, die in eine axiale Gewindebohrung (12) des Bolzen (9) geschraubt ist, dass der Grund der Gewindebohrung (12) durch den radialen Bohrungsabschnitt (17) mit der Kontaktfläche zwischen dem Bolzen (9) und der Aufnahmebohrung (6) verbunden ist und dass die Gewindebohrung (12) und der radiale Bohrungsabschnitt (17) mit dem niedrig viskosen Medium gefüllt sind.

10. Kupplung nach Ansprüchchen 7 und 9, **dadurch gekennzeichnet, dass** der Bolzen (9) im Bereich des radialen Bohrungsabschnittes (17) mit einer umlaufenden Nut (22) versehen ist.

11. Kupplung nach Anspruch 10, **dadurch gekennzeichnet, dass** eine umlaufende Nut (23) in der Aufnahmebohrung (6) im Bereich des radialen Bohrungsabschnittes (17) im Kupplungsteil (2) eingebracht ist.

12. Verfahren zur Demontage von Bolzen aus Kupplungsteilen einer Kupplung nach den Ansprüchen 1 bis 9, **dadurch gekennzeichnet, dass** die von der Außenseite der Kupplung zu der Kontaktfläche zwischen dem Bolzen (9) und der Aufnahmebohrung (6) im Bereich des selbsthemmenden Sitzes des Bolzens (9) führende Bohrung (15) mit einem niedrig viskosen Medium gefüllt wird und dass der Druck des Mediums durch Einschrauben der dicht verschließenden Schraube (20) in die Bohrung (15) soweit erhöht wird, bis sich der Bolzen (9) von seinem Sitz löst.

## Claims

1. Elastic coupling for connecting two shafts (3, 4) composed of two coupling parts (1, 2) which are connected to one another by means of bolts (9) which are guided through receiving bores (5, 6) which are provided axially in the coupling parts (1, 2), wherein each bolt (9) is enclosed in the respective receiving bore (5, 6) of a coupling part (1, 2) by an elastic buffer (7) which is convex in shape and is inserted into the receiving bore, and each bolt (9) is inserted in a self-locking fashion into the receiving bore (6, 5) of the other coupling part (2, 1), **characterized in that** at least one bore (15) is made as far as the outside of the coupling, from the contact face between the bolt (9) and the receiving bore (6, 5) in the region of the self-locking seat of the bolt (9), and **in that** the bore (15) is filled with a low-viscosity medium and is closed off in the entry region in a releasable fashion by a screw (20) which can be screwed into the bore (15).

2. Coupling according to Claim 1, **characterized in that** the bore (15) has a bore section (17) which extends radially or obliquely with respect to the contact face, and a bore section (16) which extends axially with respect to the outside of the coupling.

3. Coupling according to Claim 1 or 2, **characterized in that** the bore (15) is filled with grease.

4. Coupling according to one of Claims 1 to 3, **characterized in that** the axial bore section (16) is provided in the entry region with a thread (19) into which the screw (20) which closes off the bore (15) engages.

5. Coupling according to one of Claims 1 to 4, **characterized in that** a seal is provided between the thread (19) of the axial bore section (16) and the thread (19) of the screw (20).

6. Coupling according to Claim 5, **characterized in that** the seal is composed of a Teflon sealing strip (21).

7. Coupling according to one of Claims 1 to 6, **characterized in that** the axial bore section (16) and the radial bore section (17) of the bore (15) are formed in the bolt (9).

8. Coupling according to one of Claims 1 to 6, **characterized in that** the bore (15) is introduced into one of the coupling parts (1, 2) in the vicinity of the self-locking seat of the bolt (9).

9. Coupling according to one of Claims 1 to 6, **characterized in that** the bolt (9) is held in the coupling by a fastening screw (11) which is screwed into an axial threaded bore (12) of the bolt (9), **in that** the base of the threaded bore (12) is connected to the contact face between the bolt (9) and the receiving bore (6) through the radial bore section (17), and **in that** the threaded bore (12) and the radial bore section (17) are filled with the low-viscosity medium.

10. Coupling according to Claims 7 and 9, **characterized in that** the bolt (9) is provided with a circumferential groove (22) in the region of the radial bore section (17).

11. Coupling according to Claim 10, **characterized in that** a circumferential groove (23) is formed in the receiving bore (6) in the region of the radial bore section (17) in the coupling part (2).

12. Method for removing bolts from coupling parts of a coupling according to Claims 1 to 9, **characterized in that** the bore (15) which leads from the outside of the coupling to the contact face between the bolt (9) and the receiving bore (6) in the region of the self-locking seat of the bolt (9) is filled with a low-viscosity medium, and **in that** the pressure of the medium is increased by screwing the tightly closing screw (20) into the bore (15) until the bolt (9) is released from its seat.

## Revendications

1. Accouplement élastique de liaison de deux arbres ( 3, 4 ) constitué de deux parties ( 1, 2 )d'accouplement qui sont reliées entre elles par des axes ( 9 ) qui passent dans des trous ( 5, 6 ) de réception ménagées axialement dans les parties ( 1, 2 ) d'accouplement, chaque axe ( 9 ) étant entouré, dans le trou ( 5, 6 ) de réception respectif d'une partie ( 1, 2 ) d'accouplement, d'un tampon ( 7 ) élastique de forme bombée et inséré dans le trou de réception et étant inséré avec auto-blocage dans le trou ( 6, 5 ) de réception de l'autre partie ( 2, 1 ) d'accouplement, **caractérisé en ce qu'**à partir de la surface de contact entre l'axe ( 9 ) et le trou ( 6, 5 ) de réception dans la partie du siège auto-bloquant de l'axe ( 9 ) au moins un trou ( 15 ) va jusqu'au côté extérieur de l'accouplement et **en ce que** le trou ( 15 ) est rempli d'un milieu peu visqueux et est fermé dans la partie d'entrée de manière amovible par une vis ( 20 ) pouvant être vissée dans le trou ( 15 ).

2. Accouplement suivant la revendication 1, **caractérisé en ce que** le trou ( 15 ) a une section ( 17 ) allant radialement de manière inclinée vers la surface de contact et une section ( 16 ) allant axialement vers le côté extérieur de l'accouplement.

3. Accouplement suivant la revendication 1 ou 2, **caractérisé en ce que** le trou ( 15 ) est rempli de graisse.

4. Accouplement suivant la revendication 1 à 3, **caractérisé en que** la section ( 16 ) axiale du trou est munie dans la partie d'entrée d'un taraudage ( 19 ) dans lequel engrène la vis ( 20 ) fermant le trou ( 15 ).

5. Accouplement suivant l'une des revendications 1 à 4, **caractérisé en ce qu'**il est prévu une étanchéité entre le taraudage ( 19 ) de la section ( 16 ) axiale du trou et le filetage ( 19 ) de la vis ( 20 ).

6. Accouplement filtrant suivant la revendication 5, **caractérisé en ce que** l'étanchéité est en un ruban ( 21 ) d'étanchéité en téflon.

7. Accouplement suivant l'une des revendications 1 à 6, **caractérisé en ce que** la section ( 16 ) axiale et la section ( 17 ) radiale du trou ( 15 ) sont ménagées dans les axes ( 9 ).

8. Accouplement suivant l'une des revendications 1 à 6, **caractérisé en ce que** le trou ( 15 ) est ménagé dans l'une des parties ( 1, 2 ) de l'accouplement à proximité du siège auto-bloquant de l'axe ( 9 ).

9. Accouplement suivant l'une des revendications 1 à 6, **caractérisé en ce que** l'axe ( 9 ) est maintenu dans l'accouplement par une vis ( 11 ) de fixation qui est vissée dans un taraudage ( 12 ) axial de l'axe ( 9 ), **en ce que** le fond du taraudage ( 12 ) est relié par le tronçon ( 17 ) radial du trou à la surface de contact entre l'axe ( 9 ) et le trou ( 6 ) de réception et **en ce que** le taraudage ( 12 ) et la section ( 17 ) radiale du trou sont emplis d'un milieu peu visqueux.

10. Accouplement suivant les revendications 7 et 9, **caractérisé en ce que** l'axe ( 9 ) est muni d'une rainure ( 22 ) faisant le tour dans la partie de la section ( 17 ) radiale du trou.

11. Accouplement suivant la revendication 10, **caractérisé en ce qu'**une rainure ( 23 ) faisant le tour est ménagée dans le trou ( 6 ) de réception dans la région de la section ( 17 ) radiale du trou de la partie ( 2 ) d'accouplement.

12. Procédé de démontage d'axe de partie d'un accouplement suivant les revendications 1 à 9, **caractérisé en ce que** l'on remplit d'un milieu peu visqueux le trou ( 15 ), allant du côté extérieur de l'accouplement à la surface de contact entre l'axe ( 9 ) et le trou ( 6 ) de réception, dans la région du siège auto-bloquant de l'axe et **en ce que** l'on augmente la pression du fluide en vissant dans le trou ( 15 ) la vis ( 20 ) fermant de manière étanche jusqu'à ce que l'axe ( 9 ) se détache de son siège.
